Europäisches Patentamt

European Patent Office

Office européen des brevets

(19)

(11) **EP 1 669 327 A2**

(12) **EUROPÄISCHE PATENTANMELDUNG**
veröffentlicht nach Art. 158 Abs. 3 EPÜ

(43) Veröffentlichungstag:
**14.06.2006 Patentblatt 2006/24**

(21) Anmeldenummer: **04772329.1**

(22) Anmeldetag: **27.08.2004**

(51) Int Cl.:
**C03B 20/00** (1980.01)    **C09K 11/00** (1974.07)
**C09K 11/08** (1974.07)    **C09K 11/59** (1985.01)

(86) Internationale Anmeldenummer:
**PCT/JP2004/012373**

(87) Internationale Veröffentlichungsnummer:
**WO 2005/021449 (10.03.2005 Gazette 2005/10)**

(84) Benannte Vertragsstaaten:
**AT BE BG CH CY CZ DE DK EE ES FI FR GB GR
HU IE IT LI LU MC NL PL PT RO SE SI SK TR**

(30) Priorität: **29.08.2003  JP  2003305634**

(71) Anmelder: **The New Industry Research
Organization
Kobe-shi, Hyogo 650-0047 (JP)**

(72) Erfinder:
• **Uchino, Takashi
Higashinada-ku, Kobe-shi , yogo 6580013 (JP)**
• **Yamada, Tomoko
N ada-ku, Kobe-shi, Hyogo 6570066 (JP)**

(74) Vertreter: **Jeck, Anton
Patentanwalt,
Klingengasse 2/1
71665 Vaihingen/Enz (DE)**

(54) **TRANSPARENTER, SELBSTLEUCHTER QUARZGLAS-LEUCHTSTOFF UND VERFAHREN ZUR HERSTELLUNG DIESES LEUCHTSTOFF**

(57)    Gegenstand dieser Erfindung ist es, eine lichtemittierende Vorrichtung der nächsten Generation von optischen Vorrichtungen zu schaffen, die eine breite Emissionseigenschaft besitzt, bei der die Breite bei einem halben Maximum eines Emissionsspektrums in einem Wellenlängenbereich von sichtbarem Licht groß ist und die Fähigkeit vorhanden ist, eine Weißlichtemittierung durch Fotolumineszenz (PL) zu beobachten.

Bei einem Ausbackverfahren für die Aushärtung einer Formpressung, die durch Formpressung von feinen Silikatpartikeln, wie begasten Silikaten, bei einer Ausbacktemperatur von nicht höher als 1000° C entsteht, werden Hydroxylgruppen der feinen Silikatpartikel in ausreichendem Maße einer Entwässerungskondensationsreaktion ausgesetzt, so dass die Partikel transparent werden. Bei dem Verfahren entwickelt sich eine Störstellenstruktur, die ohne Entspannung aufrechterhalten bleibt, wodurch ein Quarzglas erzeugt wird. Das Quarzglas wird als Leuchtstoff verwendet

EP 1 669 327 A2

## Beschreibung

Diese Erfindung bezieht sich auf einen transparenten, selbstleuchtenden Quarzglas-Leuchtstoff und auf ein Verfahren zur Herstellung dieses Leuchtstoffs. Genauer gesagt, bezieht sie sich auf ein transparentes Quarzglas, das aus feinen Silikatpartikeln gewonnen wird, eine Emissionseigenschaftsbreite im Wellenlängenbereich des sichtbaren Lichts aufweist und für Weißlicht ausstrahlende Vorrichtungsstoffe verwendet werden kann.

In den letzten Jahren wurden Verbesserungen an einer sichtbaren, lichtemittierenden Kurzwellenlängen-Diode (LED) einer Nitridhalbleiter-Art vorgenommen, und eine weiße LED wurde unter Verwendung dieser Diode anstelle eines konventionellen Beleuchtungskörpers, beispielsweise einer elektrischen Birne oder einer fluoreszierenden Lampe, entwickelt. Wird die weiße LED als Beleuchtungsmittel eingesetzt, entstehen folgende Vorteile:

Im Vergleich zu einer Glühlampe oder fluoreszierenden Lampe wird Strom gespart, die laufenden Kosten werden vermindert, die Sicherheit wird erhöht, und die Haltbarkeitsdauer wird verlängert. Außerdem ist es nicht nötig, eine toxische Substanz, wie Quecksilber, in einer fluoreszierenden Lampe zu verwenden.

Wenn die weiße LED realisiert wird, gibt es einige Auswahlmöglichkeiten. Die Lichtfarbe einer LED ist einmalig für einen Halbleiterkristall, der für einen LED-Chip verwendet wird, wobei es darauf ankommt, dass die Bandlücke und die Lichtfarbe einer üblichen LED zu einer einzigen Farbe wird, wie rot, grün oder blau. Um eine weiße LED zu erhalten, gibt es ein Mittel, das die rote LED, die grüne LED und die blaue LED zusammenfasst, wobei alle LED's Licht zur gleichen Zeit emittieren. Außerdem wird die weiße LED durch eine Kombination der Elektrolumineszenz (EL) und der Fotolumineszenz (PL) und mit einer fluoreszierenden Substanz verwirklicht, wobei die blaue LED und ein Seltenerdmetall oder Ähnliches verwendet werden.

Wie oben beschrieben, entsteht die weiße LED mit der fluoreszierenden Substanz, wobei die blaue LED und das Seltenerdmetall verwendet werden. Durch die Verwendung des Seltenerdmetalls wird die Verarbeitung der weißen LED erschwert, und die Probleme werden an den nötigen Betriebsmittelvorräten und Kosten deutlich. Daher ist für die nächste Generation optischer Geräte ein Stoff erforderlich, durch den die Umwelt bei einer Entsorgung nicht belastet wird, dessen Herstellungsverfahren einfacher als das der konventionellen, weißen LED ist und der die Anforderungen an niedrige Kosten, Energieeinsparungen und Schonung der Umwelt erfüllt (s. u. Patentschrift 1 und Nicht-Patentschrift 1).

Ein Sinterverfahren feiner Partikel ist in den Unterlagen über das Quarzglas auf der folgenden Liste beschrieben, aber ein Sinterverfahren für ein transparentes Quarzglas wird hier nicht beschrieben. Außerdem werden hier keine Emissionseigenschaften (Ausstrahlung von weißem Licht) erörtert.

Patentschriften 1 bis 4 und Nicht-Patentschriften 1 bis 4:

Patentschrift 1:     veröffentlichte, ungeprüfte japanische Patentanmeldung 2001-156336,
Patentschrift 2:     veröffentlichte, ungeprüfte japanische Patentanmeldung H02-133329,
Patentschrift 3:     veröffentlichte, ungeprüfte japanische Patentanmeldung 2002-211935,
Patentschrift 4:     veröffentlichte, ungeprüfte japanische Patentanmeldung H02-201664,

Nicht-Patentschrift 1:     Bericht der MITSUBISHI CABLE INDUSTRIES, LTD, Seite 35 bis 40, Juli 2002,
Nicht-Patentschrift 2:     G. V. Chandrashekhar; Mat: Res. Soc. Symp. Proc., Vol. 73, Seite 705 bis 710, "DIELECTRIC PROPERTIES OF SOL-GEL SILICA GLASSES" ("Nichtleitende Eigenschaften von Sol-Gel-Silika-Gläsern")
Nicht-Patentschrift 3:     Hiroshi Suzuki, Japan Ceramics Association Scientific Paper, Vol. 100, Nr. 3, Seite 272 bis 275, März 1992, (Japanischer Keramik-Verband, Wissenschaftliches Papier, Band 100, Nr. 3 Seite 272 bis 275, März 1992, "Feinstruktur-Kontrolle von porösem Silika-Glas unter Verwendung kugelförmiger Monodispersions-Silika- Partikel),
Nicht-Patentschrift 4:     R. Clasen; Glastech. Bericht, Band. 61, Nr. 5, Seiten 119 bis 126, Mai 1988, "Preparation of glass and ceramics by sintering colloidal particles deposited from the gas phase" ("Herstellung von Glas und Keramiken durch Sintern kolloidaler Partikel, die als Niederschlag aus der Gasphase stammen").

a) Zu lösendes Problem

Das Ziel dieser Erfindung ist es, eine lichterzeugende Vorrichtung der nächsten Generation optischer Geräte zu präsentieren, die in der Lage ist, eine weißlichtausstrahlende Fotolumineszenz (PL) zu erzeugen, d.h., dass es das Ziel ist, ein lichtemittierendes Gerät mit einer breiten Emissionseigenschaft zu entwickeln, das eine Halbbandbreite eines Emissionsspektrums in einem Wellenlängenbereich von sichtbarem Licht aufweist, wobei sich die Emissionseigenschaft von derjenigen einer LED dadurch unterscheidet, dass die Halbbandbreite des Emissionsspektrums klein und die Einfarbeneigenschaft groß ist.

Als Resultat einer sorgfältigen Recherche nach einem Störstellenbildungsverfahren einer amorphen Struktur eines Quarzglases durch die Erfinder fanden die Erfinder, dass ein transparentes Quarzglas, das unter Verwendung feiner Silikatpartikel unter einer bestimmten Ausbacktemperatur hergestellt wird, Voraussetzung für die breite Emissionseigenschaft ist, bei der die Halbbandbreite des Emissionsspektrums im Wellenlängenbereich des sichtbaren Lichts groß ist, und somit vervollständigten sie die gegenwärtige Erfindung.

b) Mittel zur Lösung des Problems

In der vorliegenden Erfindung wird eine Druckform aus feinen Silikatpartikeln durch Formpressen geformt und bei einer bestimmten Temperaturbedingung ausgebacken, so dass eine Störstellenstruktur ohne Entspannung entsteht, wodurch ein transparentes Quarzglas mit weißer Emissionseigenschaft industriell hergestellt ist.

Bei den allgemein üblichen industriellen Herstellungsverfahren von Quarzglas ist eine hohe Temperatur von 1800° C oder höher zum Aufheizen und Fusionieren der feinen Silikatpartikel nötig, die durch Heizen und Fusion von Silikatkristallen oder Verbrennung von Siliziumtetrachlorid unter einer Sauerstoff-Wasserstoff-Flamme entstanden sind.

Andererseits wird das Quarzglas bei dem Herstellungsverfahren gemäß dieser Erfindung durch eine feste Phasenreaktion von feinen Silikatpartikeln ohne Verschmelzung hergestellt. Genauer gesagt, wird die Formpressung unter einer niedrigeren Temperatur als die Schmelztemperatur nach der Formpressung mit Hilfe der Reaktion zwischen den Oberflächen der chemisch aktiven Silikate ausgehärtet, wodurch das Quarzglas hergestellt wird, wobei strukturelle Störstellen entstehen und ohne Entspannung aufrecht erhalten bleiben.

Hier bedeutet die Formpressung mit Hilfe einer Reaktion zwischen den Oberflächen der chemisch aktiven Silikate, dass die feinen Silikatpartikel formgepresst werden und damit die Formpressung stattfindet.

Außerdem ist es schwierig, die Formpressung der feinen Silikatpartikel durchzuführen und die Druckformung bei einem Druck von 5MPa oder weniger stattfinden zu lassen.

Ein Ausbackverfahren findet in einem Temperaturbereich von 500 bis 1400° C und in einem Zeitbereich von 1 Minute bis 300 Stunden statt, so dass die Strukturstörstellen entstehen und beibehalten werden.

Der Grund für die Ausbackung des Quarzglases bei einer niedrigeren Temperatur als der Schmelztemperatur und für die lange Zeit wird nachfolgend erläutert.

Meistens enthält ein feiner Silikatpartikel eine große Anzahl von Hydroxylgruppen (Silanol). Eine Störstellenstruktur, bei der eine Silizium-Sauerstoff-Verbindung gespalten wird, kann in einer Glasstruktur ausgelöst werden, in der die Kondensationsreaktion eines Wasserentzugsverfahrens der Hydroxylgruppen entfernt wird. Eine Temperatur von 200° C oder höher ist im Allgemeinen erforderlich, um die feinen Silikatpartikel der Wasserentzugsreaktion auszusetzen. Außerdem ist eine Temperatur von 500° C oder höher erforderlich, damit die Hydroxylgruppen zwischen den feinen Silikatglaspartikeln ausreichend wasserentzugskondensiert sind.

Wenn jedoch eine Formpressung bei einer höheren Temperatur als 1400° C erfolgt, findet eine aktive Atombewegung statt, und daher entspannen sich die durch die Wasserentzugsverfahrensreaktion entstandenen Störstellen der Hydroxylgruppen.

Daraufhin wird eine Ausbacktemperatur bei der Formpressung im Bereich von 500° C bis 1400° C vorgesehen, so dass die entstandenen Störstellen, die in dem Wasserentzugskondensierungsverfahren der Hydroxylgruppen der feinen Silikatpartikel entstanden sind, ohne Abschwächung aufrecht erhalten bleiben können.

Der Ausbackprozess wird in einem Zeitbereich von 1 Minute bis 300 Stunden durchgeführt, so dass die Wasserentzugskondensationsreaktion der Hydroxylgruppen der feinen Silikatpartikel ausreichend durchgeführt wird. Der Wasserbestandteil des üblichen Quarzglases reicht von 300 ppm bis 500 ppm (ppm = Teile auf eine Million).

Die Ausbackzeit im Zeitbereich von 1 Minute bis 300 Stunden ist für die Backtemperatur erforderlich, damit der Wasseranteil des Quarzglases dieser Erfindung im Bereich von 300 ppm bis 500 ppm verbleibt.

Insbesondere das transparente Quarzglas, dessen Ausbackung bei einer Temperatur von 980° C und in einem Zeitbereich von 120 bis 200 Stunden liegt, hat eine breite Spektraleigenschaft, die eine gesamte Wellenlängenreichweite von sichtbarem Licht mit einem Wellenlängenhöchstwert von 520 nm und einer vollen Breite bei dem halben Maximum (full with half maximum = FWHM) von etwa 200 nm hat, und ferner hat dieses transparente Quarzglas eine weiße Emissionseigenschaft, wobei die Stärke der Fotolumineszenz (PL) so hoch ist, dass eine Beobachtung mit bloßem Auge möglich ist.

Da die feinen Silikatpartikel für das Verfahren zur industriellen Herstellung des transparenten Quarzglases gemäß dieser Erfindung verwendet werden, wird begastes Silikat verwendet, das ein künstliches, nicht kristallinisches (gestaltloses) Siliziumdioxyd und superfeine Partikel von hoher Reinheit mit einer Partikelgröße von einigen nm bis Zehntel nm enthält. Daher ist ein glatter Reaktionsverlauf der festen Phase möglich, weil die begasten Silikate eine hochreaktive Oberfläche aufweisen.

Die Partikelgröße der begasten Silikate beträgt 1 nm bis 100 nm, wünschenswert sind 5 nm bis 100 nm und noch wünschenswerter 5 nm bis 50 nm. Diese Größen werden deshalb gewählt, weil die Störstellenstruktur eher entsteht, wenn die Partikelgröße klein ist. Außerdem beträgt die Partikelgröße von begastem Silikat auf dem derzeitigen Markt 7 nm bis 50 nm.

Wenn das Ausbacken in einem Temperaturbereich von 1000° C bis 1400° C und in einem Zeitbereich von einigen Minuten bis 100 Stunden stattfindet, kann das transparente Quarzglas gewonnen werden, das eine erste Emissionsspitze bei einer Wellenlänge von 400 bis 500 nm, eine zweite Emissionsspitze bei einer Wellenlänge von 650 nm und eine Emissionseigenschaftsbreite im Wellenlängenbereich von sichtbarem Licht in einem Spektrum der Fotolumineszenz (PL) aufweist. Das transparente Quarzglas hat eine rötlich-weiße Emissionseigenschaft durch einen Emissionsgipfel bei einer Wellenlänge von 650 nm.

Werden die feinen Silikatpartikel mit anorganischen Stoffpartikeln gemischt, die eine Halbleitfähigkeit und/oder eine Leitfähigkeit für die Formpressung oder Ausbackung aufweisen, besteht die Möglichkeit, dass die Störstellenstruktur entsteht und ein Quarzglas mit einer roten Emissionseigenschaftsart gewonnen werden kann. Wenn beispielsweise die feinen Silikatpartikel mit Kohlenstoff, Silizium oder einem ähnlichen Stoff vermischt werden, entsteht ein rosa Quarzglas mit einer roten Emissionseigenschaft.

c) Auswirkung der Erfindung

Ein transparenter, selbstleuchtender Quarzglas-Leuchtstoff gemäß dieser Erfindung bewirkt, dass das Licht eine Breite eines halben Maximums eines Emissionsspektrums im Wellenlängenbereich von sichtbarem Licht aufweist und dass eine breite Emission stattfindet. Ferner ist ein Verfahren zur Herstellung eines transparenten Quarzglas-Leuchtmaterials gemäß dieser Erfindung ein einfaches Herstellungsverfahren, wobei es lediglich einer Formpressung und Ausbackung bedarf, und das Verfahren bewirkt, dass der Quarzglas-Leuchtstoff bei niedriger Ausbacktemperatur auf einfache Weise hergestellt werden kann.

Ferner besitzt der transparente, selbstleuchtende Quarzglas-Leuchtstoff gemäß dieser Erfindung eine ausgezeichnete Standzeit, d. h., dass die Emissionseigenschaft lange Zeit (einige Monate) unverändert beibehalten werden kann.

Es besteht eine hohe Möglichkeit, dass der transparente, selbstleuchtende Quarzglas-Leuchtstoff aufgrund der oben beschriebenen Emissionseigenschaft und des Herstellungsverfahrens wie eine weiße LED zum praktischen Leuchtstoff gemacht werden kann.

Beschreibung bevorzugter Ausführungsbeispiele

Die besten Ausführungsbeispiele dieser Erfindung werden im Folgenden unter Bezugnahme auf die dazugehörigen Zeichnungen beschrieben.

a) Erstes Ausführungsbeispiel

Ein Verfahren zur Herstellung eines transparenten Quarzglases gemäß dieser Erfindung umfasst eine Formpressung feiner Silikatpartikel und ein Formpressungs-und Ausbackverfahren, um die Formpressung auszuhärten. Die Aushärtung wird unter der Voraussetzung einer Temperatur durchgeführt, die eine Störstellenstruktur ermöglicht, die ohne Entspannung aufrecht erhalten bleibt. Ein Ausführungsbeispiel für das Herstellungsverfahren wird nachfolgend beschrieben.

Als feine Silikatpartikel, die zur Herstellung von transparentem Quarzglas verwendet werden, wird begastes Silikat usw. benützt. Siliziumtetrachlorid-Gas wird mit einer Flamme mit einer Temperatur von 1100° C bis 1400° C oxidiert und hydrolysiert, um ein Gasgemisch aus Wasserstoff und Sauerstoff zu verbrennen und auf diese Weise begastes Silikat herzustellen. Das begaste Silikat ist ein kugelförmiges, superfeines Partikel, wobei die Durchschnittsgröße erster Partikel etwa 10 nm beträgt und der Hauptbestandteil des begasten Silikats amorphes Siliziumdioxid ($SiO_2$) ist.

Das begaste Silizium ist ein superfeines Partikel und wird durch rasche Abkühlung hergestellt, wobei es eine Oberflächenstruktur von hoher chemischer Aktivität aufweist.

Es ist wünschenswert, dass die Durchschnittsgröße der ersten begasten Silikatpartikel, die zur Herstellung von transparentem Quarzglas verwendet werden, einige nm bis Zehntel nm beträgt. Der Grund dafür ist, dass beispielsweise begaste Silikate, bei denen die Durchschnittsgröße der ersten Partikel größer als 100 nm ist, eine niedrige chemische Aktivitätskraft der Oberfläche aufweisen und die Fusionsverbindungswirkung von begasten Silikaten während der Druckbelastung, wie oben beschrieben, klein wird und daher das begaste Silikat ungeeignet für die Herstellung von transparentem Quarzglas ist.

Das begaste Silikat weist beispielsweise folgende Merkmale auf:

- Hersteller: Sigma, St. Louis, Missouri, USA,
- Typ-Nummer: S 5130,
- Partikelgröße: 7 nm.

Außerdem wird jeder Analysenwert über Verunreinigungen von nach vorstehendem Standard begastem Silikat im nachfolgenden Text aufgeführt:

- A1203: 0,001 % oder weniger,
- Fe203: 0,0001 % oder weniger,
- Ti02: 0,001 % oder weniger.

Als nächstes wird das Druckausübungsverfahren für die Formpressung der feinen Silikatpartikel und das Formen der Formpressung erläutert.

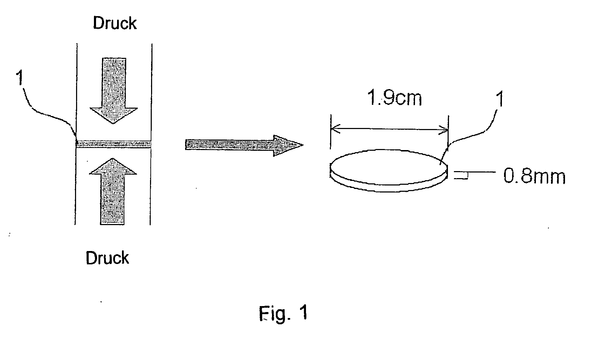

Fig. 1 zeigt ein Konzeptionsdiagramm der Formpressung der feinen Silikatpartikel. Beispielsweise wird ein begastes Silikatpartikel mit einem Gewicht von etwa 0,3 g drei Minuten lang bei 529 MPA (150 kN) auf einem Pelletbereich von 2,835 $cm^2$ unter Verwendung eines Hochdruckpressformers zusammengedrückt, und auf diese Weise kann das Pellet des Quarzglases industriell hergestellt werden.

Nun wird das Aushärtungsverfahren des Ausbackens der Formpressung erläutert. Die oben beschriebene Formpressung des begasten Silikats wird in einem elektrischen Ofen vorgenommen, in dem sie unter atmosphärischem Druck ausgebacken wird.

Wenn beispielsweise eine Härtungstemperatur von 1000° C oder weniger und die Ausbackzeit 100 Stunden oder länger beträgt, ist die Folge, dass sich ein Teil der Störstellenstruktur entspannt und diese nicht ausreichend aufrecht erhalten werden kann, wenn die Ausbacktemperatur größer als 1000° C ist. Außerdem ist dies der Grund, warum die Entwässerungskondensation der Hydroxylgruppen unzureichend ist und eine Störstellenstruktur mit einer ausreichenden Konzentration nicht erzeugt werden kann, wenn die Ausbackzeit 100 Stunden oder weniger dauert, auch wenn die Temperatur 1000° C oder weniger beträgt. Die Tendenz ist, dass die Ausbackzeit kürzer wird, die Ausbacktemperatur höher wird und die Ausbackzeit länger wird, wenn die Ausbacktemperatur niedriger wird.

Jedoch hängt eine optimale Ausbackzeit von der Backtemperatur ab. Wenn die Ausbacktemperatur hoch ist, kann deshalb die Störstellenstruktur möglicherweise durch ein rasches Voranschreiten der Entwässerungskondensationsreaktion der Hydroxylgruppen erzeugt werden. Das Gegenteil ist jedoch der Fall, die Störstellenstruktur ist möglicherweise unzureichend. Daher muss, wenn die Ausbacktemperatur hoch ist, die erforderliche Ausbackzeit vermindert werden.

Als Resultat eifriger Forschung haben die Erfinder entdeckt, dass eine Ausbackzeit von 168 Stunden wünschenswert ist, wenn die Ausbacktemperatur 980° C beträgt.

In diesem Fall wird ein Muffelofen (Typ-Nummer, KDF S70, Hersteller: Denken Co., Ltd.) zur Aushärtung der Silikatglas-Pellets verwendet.

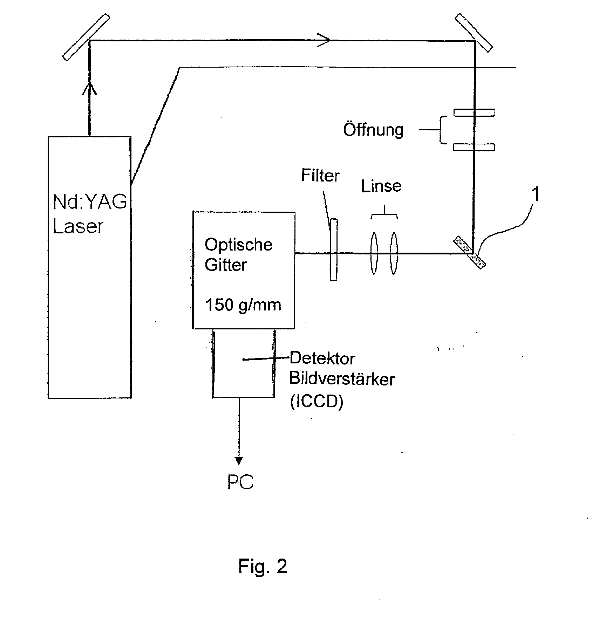

Die Emissionseigenschaft des durchsichtigen Quarzglases, das nach dem oben beschriebenen Herstellungsverfahren erzeugt wird, wird unter Bezugnahme auf die Zeichnungen erläutert. Fig. 2 zeigt ein Blockdiagramm eines Messgeräts, mit dem die Fotolumineszenz (PL) des transparenten Quarzglases gemäß dieser Erfindung gemessen wird. Ein Laserverfahren, ein Detektor-Bildverstärker (ICCD), ein Bildverstärker CCD und ähnliches wird anhand der Fig. 2 nachfolgend beschrieben.

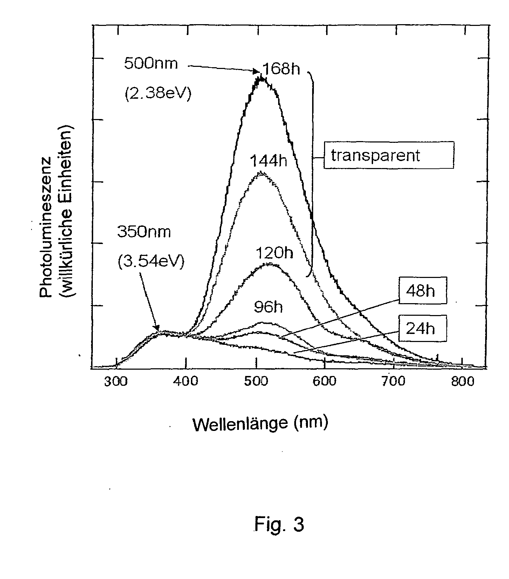

Fig. 3 zeigt ein Spektraldiagramm der Fotolumineszenz (PL) eines transparenten Quarzglases, das bei einer Backtemperatur von 980° C zur Aushärtung von transparentem Quarzglas hergestellt wird. Aus Fig. 3 wird deutlich, dass das bei einer Ausbacktemperatur von 980° C erzeugte, transparente Quarzglas zwei Hauptspitzen aufweist, eine Spitze nahe einer Wellenlänge von 350 nm und eine Spitze nahe einer Wellenlänge von 520 nm, und dass ein Spitzenwert nahe der Wellenlänge von 520 nm die Tendenz zeigt, sich zu erhöhen, wenn sich die Backzeit verlängert. Je transparenter das gewonnene Quarzglas wird, desto größer wird außerdem die Vergrößerungsrate des Spitzenwerts, der sich in dem Maße erhöht, wie sich die Ausbackzeit verlängert; je länger die Ausbackzeit wird, desto größer wird die Tendenz der Emissionsstärke der Fotolumineszenz. Die Emissionsstärke normalisiert sich bei einer Fotolumineszenz-Spektralstärke einer Wellenlänge von 350 nm.

Fig. 3 verdeutlicht, dass bei einer Ausbacktemperatur von 980° C die Silikatgläser, die bei Ausbackzeiten von 120, 144 und 168 Stunden entstehen, durchsichtig sind, und jede fotoluminszenzbezogene Stärke eine Wellenlänge von 520 nm aufweist, so dass eine Wellenlänge von 350 nm anscheinend größer als die fotoluminszenzbezogenen Stärken der Quarzgläser ist, die bei den anderen Backzeiten erzeugt werden.

Obgleich in Fig. 3 nicht dargestellt ist, dass die Ausbacktemperatur 980° C beträgt, ist hier der Spitzenwert der Fotolumineszenz eines Quarzglases, das in einer Ausbackzeit von 192 Stunden entstanden ist, niedriger als die eines Quarzglases, das in einer Ausbackzeit von 168 Stunden entstanden ist. Das bedeutet, dass es optimale Ausbackzeiten gibt, bei denen die Emissionsstärke bei jeder Ausbacktemperatur maximal wird. Wenn beispielsweise die feinen begasten Silikatpartikel unter der oben aufgeführten Bedingung formgepresst und bei einer Temperatur von 980° C ausgehärtet werden, wie in diesem Ausführungsbeispiel aufgezeigt ist, beträgt die optimale Ausbackzeit 168 Stunden. Aus diesem Grund erschlafft die geschaffene Störstellenstruktur und deren Konzentrationsbeitrag zur Emission vermindert sich, wenn die Ausbackzeit zu lang ist.

Fig. 3 macht deutlich, dass das transparente Quarzglas gemäß dieser Erfindung den Emissionsgipfel bei einer Wellenlänge von 520 nm erreicht und eine breite Emissionseigenschaft besitzt, bei der eine volle Breite bei dem halben Maximum (FWHM) von etwa 200 nm im Spektrum der Fotolumineszenz auftritt. Wenn ein Laserstrahl mit einer schwachen Energiedichte von 1 bis 2 mJ/cm$^2$ auf das transparente Quarzglas gerichtet wird, das bei einer Ausbacktemperatur von 980° C und einer Ausbackzeit von 168 Stunden gewonnen wird, entsteht ausstrahlendes weißes Licht.

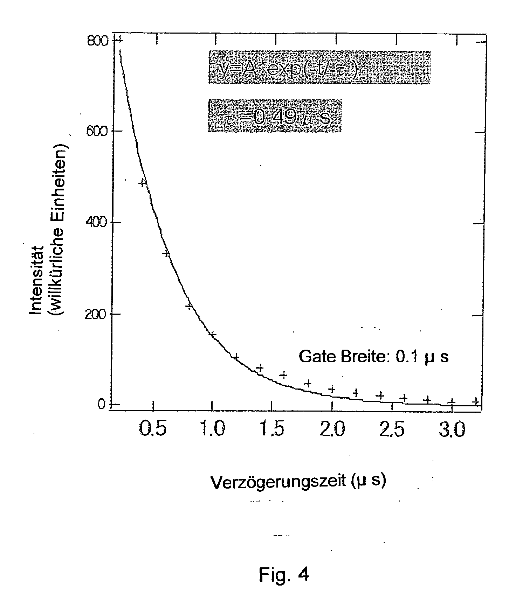

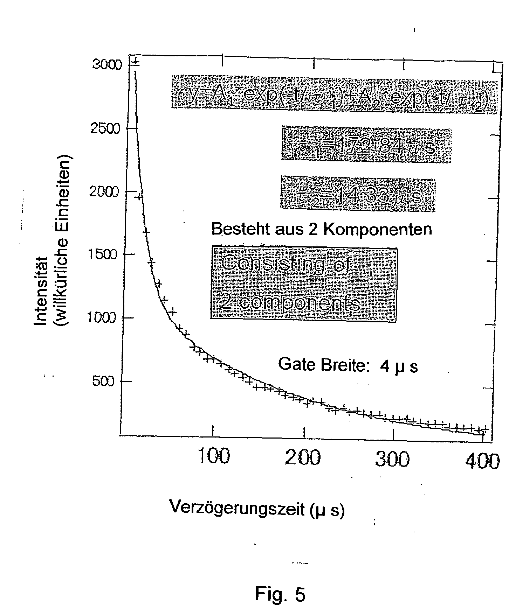

Bezüglich der Emissionszersetzungszeit des transparenten Quarzglases gemäß dieser Erfindung werden Wellenlängenlichter bei zwei Hauptspitzenwerten der Fotolumineszenz, die in Fig. 3 gezeigt werden, ausgewählt, deren Lebensdauer gemessen wird. Die gemessenen Resultate werden jeweils mit Bezug auf die Figuren 4 und 5 kommentiert. Fig. 4 zeigt eine Fotolumineszenzzersetzungszeit einer Emission mit einer Wellenlänge von 350 nm des transparenten Quarzglases, das bei einer Ausbacktemperatur von 980° C und einer Ausbackzeit von 168 Stunden entstanden ist. Auch in Fig. 5 ist eine Fotolumineszenzzersetzungszeit einer Emission mit einer Wellenlänge von 520 nm sichtbar. Fig. 4 zeigt ein verringertes Verhalten der Emissionsart mit einer Fluoreszenzdauer in einer Größenordnung von Sub-Mikrosekunden, d.h. etwa 0,5 Mikrosekunden, während Fig. 5 ein verringertes Verhalten einer Emissionsart zeigt, die eine Zersetzungszeit der Wellenlänge im Bereich einiger Mikrosekunden aufweist. Dadurch wird deutlich, dass die Zersetzungszeit einer Wellenlänge von 520 nm eine führende Stelle in den breiten Emissionswellenlängen von 520 nm einnimmt, die die Emission des transparenten Quarzglases fördert, und viel länger als die Zersetzungszeiten der anderen Wellenlängen ist. Daher kann das emittierende weiße Licht mit bloßem Auge wahrgenommen werden.

Fig. 5 zeigt, dass ein abgeschwächter Emissionsvorgang durch zwei exponentielle Funktionen dargestellt wird, und ein Resultat der Überlappung der Experimentdaten macht deutlich, dass der Verringerungsprozess der Emission durch folgende exponentielle Funktion, bezeichnet als gestreckte exponentielle Funktion, genau dargestellt werden kann.

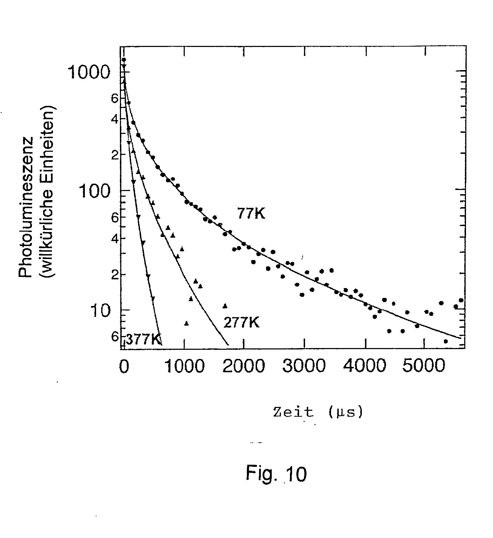

Fig. 10 ist ein grafisches Diagramm, das die Temperaturabhängigkeit des Zeitverfalls der Emissionsstärke bei 510 nm eines Prüfstücks bei einer Backtemperatur von 980° C und einer Ausbackzeit von 168 Stunden aufzeigt. Hier weist die kompakte Linie auf das Resultat hin, dass sie zu der Verwendung der gestreckten, exponentiellen Funktion passt, die in der Formel 1 gezeigt wird.

$$I = I0exp(-(t/r)^{ß}) \qquad\qquad \text{[Formel 1]}$$

Die Formel 1 unterscheidet sich von der üblichen exponentiellen Funktion in einem Punkt dadurch, dass ein Parameter ß, genannt "gestreckter Parameter", hinzugefügt wird. Wenn der Parameter ß = 1 ist, entspricht die Formel der üblichen exponentiellen Funktion.

Die Formel 1 weist darauf hin, dass, sobald der Parameter ß kleiner als 1 wird, sich die Verteilerbreite der Emissionszerfallszeit erhöht.

Eine Anpassung durch Verwendung der beiden exponentiellen Funktionen, die in Fig. 5 gezeigt werden, ist optimal für ein Anwendungsbeispiel, dass ein Zerfallsprofil aus zwei Komponenten aufweist. Hinsichtlich der gestreckten exponentiellen Funktion, die in Fig. 10 dargestellt ist, wird angenommen, dass eine Zerfallszeit aus einer großen Anzahl von Komponenten und nicht nur aus zwei Komponenten besteht. Der Parameter $\beta$ beträgt bei dem Prüfstück etwa 0,5, und daher dürfte es verständlich sein, dass die Verteilungsbreite der Emissionszerfallszeit des Prüfstücks bei dem Emissionsverfahren so groß ist, dass sie eine kurze Zerfallszeit (einige µs) bis zu einer langen Zerfallszeit (einige tausend µs) besitzt. Ein Grund, warum die Verteilungsbreite der Zerfallszeit so groß ist, wird nachfolgend erläutert.

(1) Freie Elektronen und Leerstellen werden im Prüfstück durch ultraviolette Strahlen erzeugt.
(2) Die erzeugten freien Elektronen und Leerstellen zerstreuen sich im Prüfstück.
(3) In einem Diffusionsschritt setzen sich die freien Elektronen wieder mit den Leerstellen zusammen, woraufhin die Emission beobachtet werden kann.
(4) Eine Zeitspanne von der Entstehung und Diffusion bis zu Neukombinierungen der freien Elektronen und Leerstellen erscheint als eine Zerfallszeitverteilung.

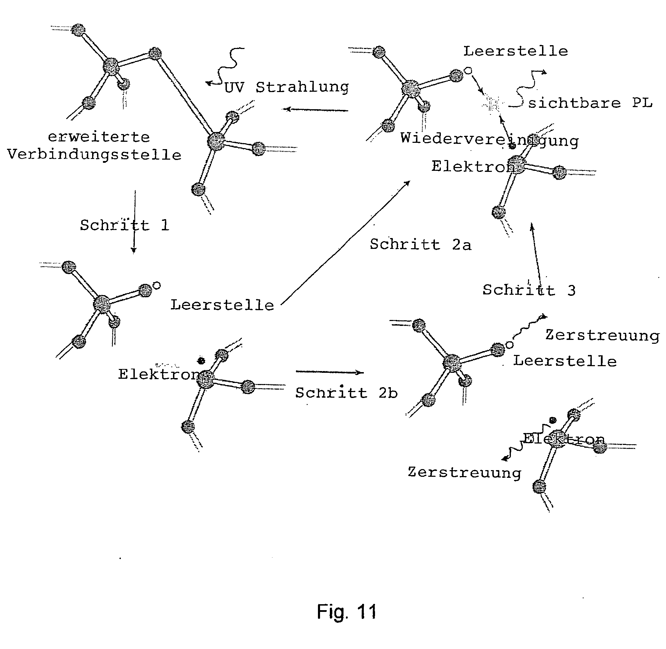

Fig. 11 zeigt schematisch die oben beschriebenen Prozesse. Das heißt, dass es verständlich sein dürfte, dass der Emissionsvorgang des Prüfstücks ohne Deaktivierung durch den Zyklus eines jeden unten aufgeführten einzelnen Schritts eine lange Zeit dauert. Jeder Schritt wird nachfolgend beschrieben.

In Schritt 1 wird ein Verfahren gezeigt, bei dem freie Elektronen und Leerstellen durch ultraviolette Bestrahlung mittels optischer Erregung in einen Zustand versetzt werden, bei dem die Störstellenstruktur aufrecht erhalten bleibt, ohne abzuschwächen (dieser Zustand wird dargestellt durch die ausgedehnte Si0-Verbindung in Fig. 11); von diesem Zustand wird erwartet, dass er im transparenten Quarzglas gemäß der vorliegenden Erfindung vorhanden ist. Überdies wird die erweiterte Si0-Verbindung bei dem Verfahren abgeschnitten.

Der Schritt 2a zeigt ein Verfahren, bei dem die erzeugten freien Elektronen und Leerstellen sich miteinander verbinden, um sichtbares Licht auszustrahlen. Der Schritt 2b zeigt ein Verfahren, bei dem die erzeugten freien Elektronen und Leerstellen im Prüfstück sich zerstreuen, bevor sie sich wieder miteinander verbinden. Außerdem setzen sich die freien Elektronen und Leerstellen, die in Schritt 1 erzeugt werden, entweder gemäß Schritt 2a oder Schritt 2b fort.

Aus Schritt 3 ist ersichtlich, dass sich bei dem Verfahren die freien Elektronen und Leerstellen, die sich in Schritt 2b zerstreut haben, an einer bestimmten Störstelle wieder kombinieren, um sichtbares Licht auszustrahlen.

Die Schritte 2a, 2b und 3 zeigen ein Verfahren, bei dem die erzeugten freien Elektronen und Leerstellen sich dort oder über die Zerstreuung wieder miteinander verbinden, um sichtbares Licht auszustrahlen.

In Schritt 4 wird ein Verfahren gezeigt, bei dem das Auftreten der Störstellenstruktur sofort verschwindet, wenn die ausgedehnte Si0-Verbindung in Schritt 1 abgeschnitten wird. Die Struktur erscheint wieder, wenn die Si0-Verbindung wieder hergestellt ist, wobei eine Wiederverbindung der freien Elektronen und Leerstellen stattfindet. Mit anderen Worten, eine Störstellenstruktur kehrt zurück, wenn die Si0-Verbindung durch Wiederverbindung der freien Elektronen und Leerstellen erneut entstanden ist.

Bei dem oben beschriebenen Modell wird es schwieriger, die Diffusion entstehen zu lassen, wenn die Temperatur sinkt und sich die langen Lebenskomponenten steigern. Eine Prüfung des Abschwächungsprozesses der Emission zwischen den flüssigen Stickstofftemperaturen von -200° C (77K) und 100° C (377K) weist darauf hin, dass die Lebensdauer sich in dem Maße verlängert, wie die Temperatur vermindert wird. Über eine solche ausgedehnte Exponentialfunktionsabschwächung der Emissionsstärke in Bezug auf Quarzglas wurde noch nicht berichtet. Es dürfte daher verständlich sein, dass die Emission des Prüfstücks ein neues Emissionsphänomen als Resultat eines spezifischen Störstellenzustands darstellt, der durch die Sinterreaktion der festen Phase der feinen Silikatpartikel in Nanogröße und die optische Erregung der Elektronen und Leerstellen, die durch den Störstellenzustand erzeugt wurden, verursacht wird.

b) Zweites Ausführungsbeispiel

Die Emissionseigenschaft eines Quarzglases, das bei einer Ausbacktemperatur in einem Bereich von 1000 bis 1400° C hergestellt wurde, wird als ein weiteres Ausführungsbeispiel vorgestellt.

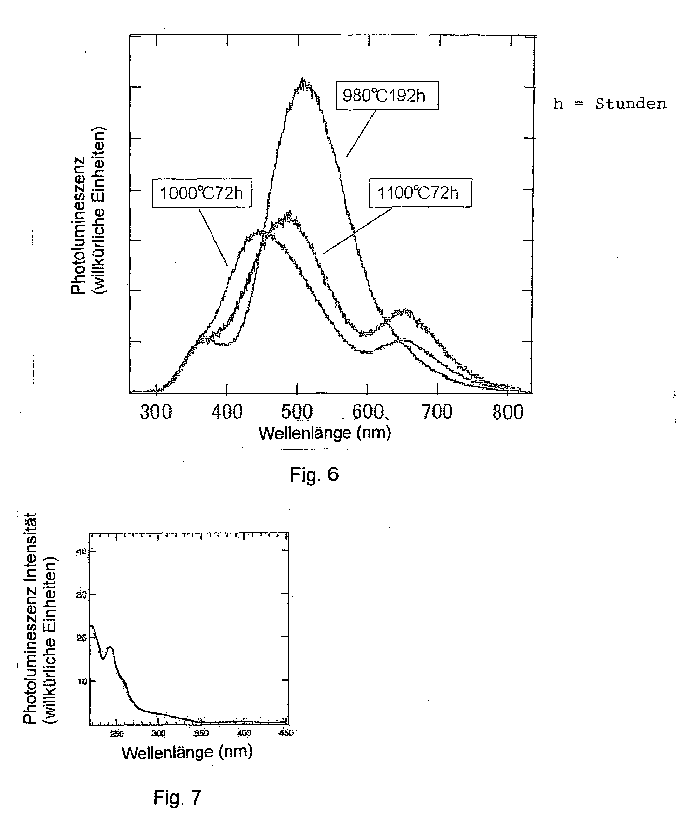

Fig. 6 zeigt ein Spektraldiagramm der Fotolumineszenz (PL) (Quarzgläser ausgehärtet bei 980° C, 1000° C und 1100° C). Fig. 6 weist darauf hin, dass ein transparentes Quarzglas erzeugt werden kann, wenn die Ausbacktemperatur höher als 1000° C ist, wobei das transparente Quarzglas eine erste Emissionsspitze bei einer Wellenlänge im Bereich von 400 nm bis 520 nm, eine zweite Emissionsspitze bei einer Wellenlänge von 650 nm und eine mögliche Emissionsbreite im Wellenlängenbereich von sichtbarem Licht in einem Fotolumineszenzspektrum erreicht.

c) Drittes Ausführungsbeispiel

Werden die feinen Silikatpartikel mit anorganischen Stoffpartikeln vermischt, die eine halbleitende Fähigkeit und/oder Leitfähigkeit für die Formpressung aufweisen, besteht die Wahrscheinlichkeit, dass die Störstellenstruktur entsteht und ein Quarzglas mit einer roten Emissionseigenschaft gewonnen wird. In diesem Fall kann daher ein transparentes Quarzglas mit einer anderen lichtausstrahlenden Farbe gefertigt werden, die kein Weißlicht ist. Wenn beispielsweise die feinen Silikatpartikel mit Kohlenstoff, Silizium oder ähnlichen Stoffen vermischt werden, wird ein rosa Quarzglas mit einer roten Ausstrahlungseigenschaft erzeugt.

d) Viertes Ausführungsbeispiel

Fig. 7 zeigt das Resultat einer Messung eines Emissionserregungsspektrums zur Suche einer optimalen Wellenlänge eines Erregungslichts im Bezug auf die Emissionseigenschaft des transparenten Quarzglases gemäß der vorliegenden Erfindung. Das Erregungsspektrum einer 510 nm-Emission wird gemessen, wobei die Wellenlänge von 510 nm eine höhere Spitze (die Fotolumineszenzstärke ist höher) zwischen den beiden Spitzen aufweist, die auf dem Spektraldiagramm (siehe Fig. 3) über der Fotolumineszenz des Prüfstücks (transparentes Quarzglas) erscheinen, erzeugt mit einer Ausbacktemperatur von 980° C und einer Ausbackzeit von 168 Stunden. Fig. 7 zeigt, dass das Fotolumineszenzerregungsspektrum der Emission einen Gipfel in der Nähe von 240 nm aufweist.

Da die Emissionsstärke bei einer Spitzenposition des Erregungsspektrums am stärksten ist, ist die optimale Erregungswellenlänge des Prüfstücks 240 nm.

Da die Stärke des Fotolumineszenzerregungsspektrums bei einer kurzen Wellenlängenseite der Spitze erhöht wird, kann ferner erwartet werden, dass sogar die Erregung einer kürzeren Wellenlänge eine Emissionsstärke erreichen kann, die der Erregung bei 240 nm gleichkommt.

e) Fünftes Ausführungsbeispiel

Als Nächstes kann ein transparentes Quarzglas industriell hergestellt werden, bei dem die Emissionsstärke einer kurzen Wellenlängenreichweite durch die Anwendung einer Vorheizbehandlung beim Herstellungsverfahren des transparenten Quarzglases gemäß der vorliegenden Erfindung weiter erhöht wird, wie dies nachfolgend beschrieben wird.

Beim Herstellungsverfahren des transparenten Quarzglases der Ausführungsbeispiele 1 und 2 wird die Formpressung ohne Vorheizbehandlung des begasten Silikats durchgeführt, und die Herstellung des transparenten Quarzglases findet mittels einer Vorheizbehandlung der Formpressung statt.

Beim vierten Ausführungsbeispiel wird als Neuerung das begaste Silikat mit einer Temperatur von 1000° C zwei Stunden lang vorbehandelt, so dass die Formpressung mit Hilfe des Prüfstücks erfolgt und die Formpressung ferner einer Vorheizungswärmebehandlung unterzogen wird, so dass das transparente Quarzglas hergestellt wird.

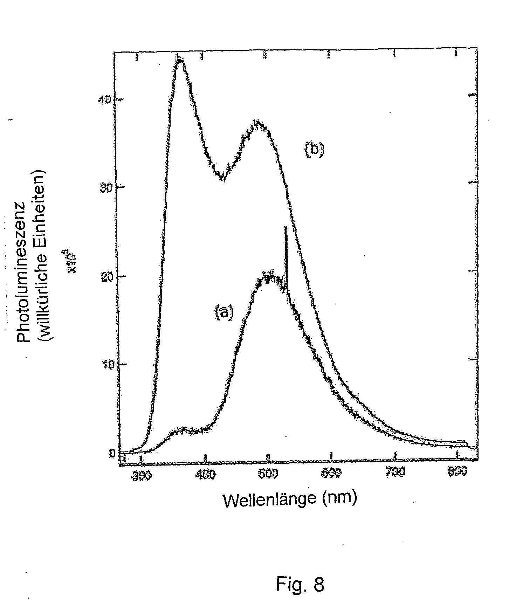

Fig. 8 zeigt ein Emissionsspektrum des transparenten Quarzglases, das der Vorheizbehandlung unterzogen wird. In Fig. 8 wird auf eine Kurve (a) hingewiesen, die ein Emissionsspektrum eines Prüfstücks darstellt, das ohne die Vorheizbehandlung hergestellt wurde. Die Kurve (b) zeigt ein Emissionsspektrum des Prüfstücks, das mit einer Vorheizbehandlung hergestellt wurde. Aus der Fig. 8 wird deutlich, dass die Emissionsstärke einer kurzen Wellenlängenkomponente (eine Spitze erscheint bei 350 nm) höher im Emissionsspektrum des transparenten Quarzglases ist, das der Vorheizbehandlung unterzogen wird.

Fig. 8 zeigt ferner, dass sich die konventionelle Emissionsstärke in der Nähe von 510 nm ungefähr verdoppelt, wenn eine Vorheizbehandlung stattfindet.

f) Sechstes Ausführungsbeispiel

Ferner wird der Druck einer Formpressung des Prüfstücks vermindert, und die Formpressung wird durchgeführt, so dass ein transparentes Quarzglas industriell hergestellt werden kann, das eine Erhöhung der Emissionsstärke im kurzen Wellenlängenbereich aufweist. Eine Erläuterung folgt.

Beim Herstellungsverfahren des transparenten Quarzglases des ersten und zweiten Ausführungsbeispiels wird der Herstellungsdruck der Formpressung auf 529 MPa festgelegt. Beim sechsten Ausführungsbeispiel wird die Formpressung bei etwa einem Dreizehntel des obigen Drucks, nämlich bei 18 MPa, durchgeführt, so dass eine Druckwirkung zum Emissionsphänomen, eine Druckabhängigkeit des Emissionsphänomens, herbeigeführt werden kann.

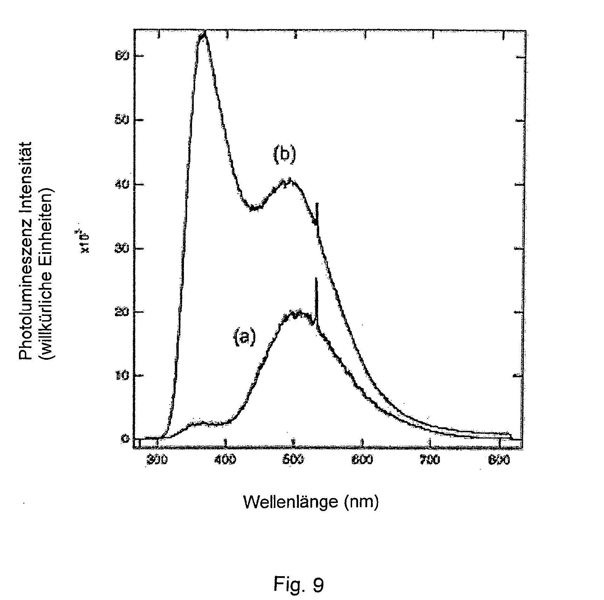

Fig. 9 stellt ein Emissionsspektrum des transparenten Quarzglases dar, das bei einem niedrigen Druck hergestellt und formgepresst wurde. In Fig. 9 zeigt die Kurve (a) ein Emissionsspektrum des konventionellen Prüfstücks und die Kurve (b) das Spektrum eines Prüfstücks, das bei einem niedrigen Formpressdruck entstand. Obgleich die Zeit bis zu demjenigen Zeitpunkt, bei dem die feinen Silikatpartikel durchsichtig werden, 200 Stunden oder länger dauert, und dies doppelt so lang im Vergleich mit der Zeit bis zu demjenigen Zeitpunkt ist, bei dem die feinen Silikatpartikel ohne Kompression durchsichtig werden, zeigt Fig. 9, dass die Emissionsstärke der kurzen Wellenlängenkomponente (eine Spitze erscheint bei 350 nm) im Emissionsspektrum des Prüfstücks hoch ist und dem Quarzglas ähnelt, das mittels der Vorheizbehandlung hergestellt wurde.

Fig. 9 zeigt ferner, dass die Emissionsstärke in der Nähe von 500 nm etwa doppelt so groß ist, wenn das Prüfstück bei einem niedrigen Pressformdruck hergestellt wird, ähnlich dem transparenten Quarzglas, das unter Anwendung der Vorheizbehandlung hergestellt wird.

Nun folgt eine Erklärung, warum ein Phänomen entsteht. Das Phänomen macht deutlich, dass eine Erhöhung in der Emissionsstärke den Kurzwellenbereich durch die Vorheizungsbehandlung und Verminderung des Formpressungsdrucks intensiviert, wie aus den Ausführungsbeispielen 5 und 6 ersichtlich ist.

Zuerst wird das Phänomen erläutert, dass eine Erhöhung der Emissionsstärke des Kurzwellenbereichs durch die Verminderung des Formpressungsdrucks beim Herstellungsverfahren des transparenten Quarzglases stattfindet.

Bei dem Druckverfahren im Formpressen der feinen Silikatpartikel und dem Formen der Formpressung, wenn der Formpressdruck niedriger wird, wird erwartet, dass der Abstand zwischen den Partikeln im Innern der Form größer wird. Daher wird eine längere Zeit erforderlich, bis die Zwischenpartikelreaktion zwischen den feinen Silikatpartikein aktiv entsteht. Konsequenterweise wird erwartet, dass sich die Reaktionszeit bis zu demjenigen Zeitpunkt, bei dem die feinen Silikatpartikel transparent werden, verlängert, wenn das transparente Quarzglas unter niedrigem Formpressdruck hergestellt wird.

Wenn das transparente Quarzglas unter niedrigem Formpressdruck hergestellt wird, werden die feinen Silikatpartikel eine lange Zeit bei einer Temperatur von 1000° C ausgebacken, bevor die Zwischenpartikelreaktion entsteht. Es ist daher zu erwarten, dass die meisten der Hydroxylgruppen der Austrocknungskondensationsreaktion ausgesetzt sind (was die Oberflächen anbelangt), bevor die Zwischenpartikelreaktionen der Hydroxylgruppen an den Partikeloberflächen entstehen. Es wird in Betracht gezogen, dass eine ähnliche Wirkung (Austrocknungskondensation an denselben Oberflächen) erzielt werden kann, wenn die begasten Silikate vorgeheizt werden, wie es der Fall ist, da das transparente Quarzglas mittels Vorheizbehandlung hergestellt wird. In den beiden Fällen der Herstellung durch Anwendung der Vorheizbehandlung und der Herstellung unter der Niedrigdruck-Formpressung kann daher vorausgesetzt werden, dass dasselbe Emissionsspektrum erzielt wird, weil eine Ausschaltreaktion mit einer niedrigen Hydroxylgruppenkonzentration an der Oberfläche der feinen Partikel vorgenommen wird.

Es ist zu erwarten, dass die Zwischenpartikelreaktion zur Herstellung der feinen transparenten Partikel von der Kondensation der Hydroxylgruppen zwischen den Oberflächen der Partikel . abhängt. Das bedeutet, dass, wenn wenige Hydroxylgruppen als Reaktionsaktivitätspunkte vorhanden sind, es schwierig wird, eine strukturelle Entspannung zwischen den Partikeln entstehen zu lassen, im Vergleich zu demjenigen Fall, in dem viele Hydroxylgruppen vorhanden sein können. Es ist daher zu erwarten, dass der Zustand, bei dem die Störstellenstruktur ohne Entspannung eher verwirklicht werden kann, leichter realisiert werden kann, wenn sein Zustand eine führende Rolle bei der Emission des transparenten Quarzglases gemäß der vorliegenden Erfindung einnehmen kann. Auf diese Weise kann die Erhöhung der Emissionsstärke deutlich gemacht werden.

Eine Emissionsgipfelstärke von 350 nm erhöht sich besonders bei den Ausführungsbeispielen 5 und 6. Dies ist ein Hinweis darauf, dass eine strukturelle Verformung der Störstellenstruktur, die die Emission von 350 nm beeinflusst, größer als bei der Störstellenstruktur ist, die die Emission von 510 nm beeinflusst. Das heißt, dass der Entspannungszustand der Störstellenstruktur in dem gewonnenen transparenten Quarzglas durch Kontrollieren einer Startkonzentration der Hydroxylgruppe an der Oberfläche der feinen Partikel geändert werden kann, auch wenn feine Partikel in gleicher Größe verwendet werden, woraufhin eine Form des Emissionsspektrums des transparenten Quarzglases und die gesamte Emissionsstärke kontrolliert werden können. Dies wird im Resultat der Ausführungsbeispiele 5 und 6 angezeigt.

Ferner wird bestätigt, dass weder eine Änderung noch eine Verringerung der Emissionseigenschaft des transparenten Quarzglases gemäß der vorliegenden Erfindung im Laufe der Zeit entsteht, auch wenn das transparente Quarzglas in einem Zustand der üblichen Lagerung ein oder mehrere Jahre lang aufbewahrt wird.

Die Art der Messapparate, die zum Messen der Fotolumineszenz (PL) des transparenten Quarzglases gemäß der vorliegenden Erfindung verwendet werden, sind wie folgt aufgelistet:

1) Bestrahlungs-Laserquelle,
Impuls Nd: YAG Laser,
(Spectra Physics INDI-40),

- Erregungswellenlänge: 266 nm,
- Impuls Breite: 5-8 ns,
- Wiederholungsfrequenz: 10 Hz,
- Strahldurchmesser <10 mm,
- Laserenergie: 1-2 mJ,

2) Monochromator,
Action Research (Aktions- Forschungs- SpectraPro 300 i Gitter,

- 150 mm optische Gitter (500 nm Blaze) (Bereich optimaler Beugungsgitter),

3) Detektor,
ICCD,
(Princeton Instruments PI-MAX 1024RB),

- CCD Format 1024 x 256 Bildpunkte
- Gipfel QE Minimum 15-20 %,
- Gate time (Durchschaltungszeit) 9 ns.

Industrielle Verwertbarkeit

Ein transparenter Quarzglas-Leuchtstoff gemäß dieser Erfindung wird mittels einfacher Verfahren industriell hergestellt, wobei feine Silikatpartikel formgepresst und ausgebacken werden. Das Quarzglas hat die Eigenschaft, eine Emissionsbreite in einem Wellenlängenbereich von sichtbarem Licht aufzuweisen, wodurch es als Leuchtstoff verwendet werden kann, wie beispielsweise bei einer Vorrichtung, die weißes Licht ausstrahlt.

Kurzbeschreibung der Zeichnungen

Die Zeichnungen zeigen in:

Fig. 1    ein Konzeptionsdiagramm der Formpressung von feinen Silikatpartikeln,

Fig. 2    ein Blockdiagramm eines Messgeräts der Fotolumineszenz (PL),

Fig. 3    ein Spektraldiagramm der Fotolumineszenz (PL), wobei die Ausbackzeit als ein Parameter definiert wird, was Quarzglas anbelangt, das bei einer Temperatur von 980° C ausgebacken wird,

Fig. 4    ein Zeitanalysenmessdiagramm eines Fotolumineszensbands (Licht mit einer Wellenlänge von 350 nm),

Fig. 5    ein Zeitanalysenmessdiagramm eines Fotolumineszensbands (Licht mit einer Wellenlänge von 520 nm),

Fig. 6    ein Spektraldiagramm der Fotolumineszenz (Quarzgläser ausgebacken bei Temperaturen von 980° C, 1000° C und 1100° C),

Fig. 7    ein Fotolumineszenzerregungs-Spektraldiagramm eines Prüfstücks, ausgebacken bei Temperaturen von 980° C und einer Zeit von 168 Stunden (Messung durch Änderung einer Wellenlänge einer Erregungslichtquelle während der Beobachtung einer Emissionsstärke von 510 nm),

Fig. 8    ein Emissionsspektrum eines transparenten Quarzglases, das einer Vorheizbehandlung unterzogen wurde (Kurve a zeigt ein Emissionsspektrum eines Prüfstücks, das ohne Vorheizbehandlung hergestellt wurde, und die Kurve b zeigt ein Emissionsspektrum des Prüfstücks, das mit Vorheizbehandlung hergestellt wurde),

Fig. 9    ein Emissionsspektrum eines transparenten Quarzglases, hergestellt bei einem niedrigen Druckpressformungsdruck (die Kurve a zeigt ein Emissionsspektrum des konventionellen Prüfstücks, und die Kurve b zeigt ein Spektrum des Prüfstücks, hergestellt bei einem niedrigen Formpressdruck,

Fig. 10    ein grafisches Diagramm, das die Temperaturabhängigkeit des Zeitzerfalls der Emissionsstärke bei 510 nm eines Prüfstücks zeigt, das bei einer Ausbacktemperatur von 980° C und einer Ausbackzeit von 168 Stunden entstanden ist (die ausgezogene Linie weist auf ein Resultat hin, das zu der Verwendung der ausgedehnten exponentialen Funktion passt) und

Fig. 11    ein Diagramm, das einen Emissionsmechanismus des transparenten Quarzglases zeigt.

**Patentansprüche**

**1.**   Verfahren zur Herstellung eines transparenten Quarzglas-Leuchtstoffs, **gekennzeichnet durch** Folgendes:

   - ein Druckverfahren zur Formpressung von feinen Silikatpartikeln und der Bildung einer Druckpressform und
   - ein Ausbackverfahren zur Aushärtung der Formpressung unter einer solchen Temperatur, dass eine Störstellenstruktur entsteht und diese ohne Entspannung aufrecht erhalten bleibt.

**2.**   Verfahren nach Anspruch 1,
   **dadurch gekennzeichnet,**
   **dass** die Temperatur im Ausbackverfahren im Bereich von 500° C bis 1400° C und die Dauer des Ausbackverfahrens in einem Bereich von 100 Minuten bis zu 300 Stunden liegt.

**3.**   Verfahren nach Anspruch 1,
   **dadurch gekennzeichnet,**
   **dass** die Temperatur im Ausbackverfahren im Bereich von 900° C bis 1000° C und die Dauer des Ausbackverfahrens in einem Bereich von 120 Minuten bis zu 200 Stunden liegt.

**4.** Verfahren nach einem der Ansprüche 1 bis 3,
**dadurch gekennzeichnet,**
**dass** die feinen Silikatpartikel begaste Silikate sind, die in einem DampfPhasen-Verfahren synthetisiert werden und hochreine, nanogroße, feine Silikatpartikel mit einer Partikelgröße im Bereich von 1 nm bis 100 nm sind.

**5.** Verfahren nach einem der Ansprüche 1 bis 4,
**dadurch gekennzeichnet,**
**dass** feine Silikatpartikel mit anorganischen Stoffpartikeln gemischt werden, die eine Halbleitfähigkeit und/oder Leitfähigkeit besitzen, die eine Pressformung und Aushärtung ermöglichen.

**6.** Verfahren nach Anspruch 4,
**dadurch gekennzeichnet,**
**dass** ferner ein Vorheizbehandlungsverfahren stattfindet, um begaste Silikate einer Wärmebehandlung bei 1000° C zwei Stunden lang vor dem Druckformprozess zu unterziehen.

**7.** Quarzglas-Leuchtstoff mit einer Emissionsspitze bei einer Wellenlänge von 500nm bis 520nm und einer breiten Emissionseigenschaft, bei der eine volle Breite bei einem halben Maximum (FWHM) von 200 nm bis 300 nm in einem Fotolumineszenz-(PL)-Spektrum vorhanden ist.

**8.** Quarzglas-Leuchtstoff mit einer ersten Emissionsspitze bei einer Wellenlänge von 400 nm bis 520 nm und einer zweiten Emissionsspitze bei einer Wellenlänge von 640 nm bis 660 nm und der Eigenschaft einer breiten Emission, bei der eine Wellenlänge im Bereich von 300 nm bis 800 nm in einem Wellenlängenbereich des sichtbaren Lichts in einem Fotolumineszenz-(PL)-Spektrum vorhanden ist.

**9.** Quarzglas-Leuchtstoff gemäß einem der Ansprüche 1 bis 8, der eine Transparenz mit einer sichtbaren Lichtdurchdringungsrate bei einer Wellenlänge von 600 nm von nicht geringer als 75 % besitzt.

**10.** Lichtemittierende Vorrichtung, in der ein transparenter Quarzglas-Leuchtstoff mittels eines Herstellungsverfahrens gemäß einem der Ansprüche 1 bis 6 gewonnen wird, oder ein Quarzglas-Leuchtstoff, der gemäß einem der Ansprüche 7 bis 9 als Leuchtstoff verwendet wird.

Druck

1

1.9cm

1

0.8mm

Druck

Fig. 1

Öffnung

Filter    Linse

Nd:YAG Laser

Optische Gitter

150 g/mm

1

Detektor Bildverstärker (ICCD)

PC

Fig. 2

Fig. 3

Fig. 4

Fig. 5

Fig. 6

Fig. 7

Fig. 8

Fig. 9

Fig. 10

Fig. 11